# NEUE EUROPÄISCHE PATENTSCHRIFT

(11) **EP 2 044 325 B2**
(45) Veröffentlichungstag und Bekanntmachung des Hinweises auf die Entscheidung über den Einspruch: **27.01.2021**
(45) Hinweis auf die Patenterteilung: 03.10.2012
(21) Anmeldenummer: 07765077.8
(22) Anmeldetag: 05.07.2007
(51) Int. Cl.: F03D 7/00, F03D 7/04, F03D 11/00

(54) **VERFAHREN ZUM BETREIBEN EINER WINDENERGIEANLAGE**
METHOD FOR OPERATING A WIND ENERGY INSTALLATION
PROCÉDÉ PERMETTANT DE FAIRE FONCTIONNER UNE ÉOLIENNE

(30) Priorität: 21.07.2006 DE 102006034251
(43) Veröffentlichungstag der Anmeldung: 08.04.2009
(73) Patentinhaber: Senvion GmbH, 22297 Hamburg (DE)
(72) Erfinder: WEITKAMP, Roland, 49090 Osnabrück (DE)
(74) Vertreter: Schlotter, Alexander Carolus Paul
(86) Internationale Anmeldenummer: PCT/EP2007/005956
(87) Internationale Veröffentlichungsnummer: WO 2008/009354

(56) Entgegenhaltungen:
- WO-A-90/07823
- WO-A-02/079646
- WO-A1-01/77525
- WO-A1-2004/111443
- WO-A2-03/088011
- DE-A1- 3 828 361
- DE-A1- 10 327 344
- DE-A1- 19 948 194
- DE-U1- 20 021 970
- DE-U1-202005 014 629
- US-A- 4 565 929
- US-A- 5 244 610
- US-A- 5 278 773
- US-A1- 2004 236 538
- US-A1- 2005 107 989
- US-A1- 2006 036 568

## Beschreibung

Die Erfindung betrifft ein Verfahren zum Betreiben einer Windenergieanlage, wobei die Windenergieanlage nach Auslösen eines Abschaltsignals von einer, einem Betriebsführungssystem logisch übergeordneten Sicherheitsabschalteinrichtung abgeschaltet wird oder ist. Ferner betrifft die Erfindung ein Energieversorgungssystem mit wenigstens einer Windenergieanlage.

Überdies betrifft die Erfindung eine Windenergieanlage mit einem Betriebsführungssystem und mit einer, dem Betriebsführungssystem logisch übergeordneten Sicherheitsabschalteinrichtung zum Auslösen eines Abschaltsignals, so dass die Windenergieanlage nach Auslösen eines Abschaltsignals abgeschaltet wird oder ist, sowie eine Windenergieanlage mit einer Sicherheitskette.

In der Regel weist eine gattungsgemäße Windenergieanlage einen Rotor, wenigstens ein winkelverstellbares Rotorblatt, eine mechanische Bremsvorrichtung zum Abbremsen des Rotors und eine Betriebsführungseinrichtung sowie ein Sicherheitssystem auf.

Die mechanische Bremsvorrichtung greift bei einer Windenergieanlage mit Getriebe auf der schnell drehenden Seite des Triebstrangs. Auf dieser Seite befindet sich auch der Generator mit seinem als Läufer bezeichneten rotierenden Teil. Die mechanische Bremsvorrichtung kann allerdings auch auf der langsamen Seite des Triebstrangs, also auf der Seite zwischen Getriebe und Rotorblätter, angeordnet werden. Die Windenergieanlage kann aber auch getriebelos ausgestaltet sein, so dass die Bremse im Bereich der Rotornabe oder des Generatorläufers angreift. Im Rahmen der Erfindung beinhaltet der Begriff Rotor insbesondere auch die Begriffe Triebstrang, schnelle Welle, Generatorläufer, Getriebe, Rotorwelle (= langsame Welle) Rotornabe und Rotorblätter. Ein Abbremsen des Rotors bedeutet insbesondere das Abbremsen des Triebstrangs.

Verfahren zum Betreiben einer Windenergieanlage und Windenergieanlagen sind an sich bekannt. Hierzu wird beispielsweise auf das Lehrbuch "Windkraft Systemauslegung, Netzintegration und Regelung", Siegfried Heier, 4. Auflage, B.G.Teubner, Februar 2005, hingewiesen.

Der Betrieb von Windenergieanlagen und Windenergieanlagen selbst ist kritisch im Hinblick auf deren Auslegung, insbesondere im Hinblick auf Sicherheitsaspekte. Insbesondere bei starken Winden in Verbindung mit einem Netzausfall, bei dem das durch den Wind im Rotor erzeugte aerodynamische Drehmoment auf keinen Widerstand durch den Generator trifft, kann es zu extremen Turmlasten, insbesondere Turmfußbiegemomenten, unkontrollierten Blattwinkelverstellungen und ggf. sogar der Auslösung einer Sicherheitskette kommen. Durch den Ausfall des Netzes bzw. allgemeiner durch einen Lastabwurf des Generators beginnt der Rotor bei starkem Wind sich zu beschleunigen, bis das Bremssystem der Windenergieanlage den Rotor anfängt zu bremsen. In Abhängigkeit der Stärke der Bremsleistung treten unterschiedlich starke Belastungen an der Windenergieanlage auf.

Darüber hinaus verfügt eine Windenergieanlage über ein Sicherheitskonzept sowie ein entsprechendes Sicherheitssystem. Hierbei umfasst das Sicherheitskonzept alle Einrichtungen, Wirkungsweisen und Handlungsanweisungen, die sicherstellen, dass eine Windenergieanlage in einem sicheren Zustand auch dann verbleibt, wenn Störungen auftreten und das Betriebsführungssystem versagt.

Das Sicherheitssystem einer Windenergieanlage verfügt über Einrichtungen, die dem Betriebsführungssystem logisch übergeordnet sind. Das Sicherheitssystem ist insgesamt durch einen ungewollten Eingriff oder eine unabsichtliche Bedienung nicht deaktivierbar. Das System spricht an, wenn sicherheitsrelevante Grenzwerte überschritten werden oder das Betriebsführungssystem die Führung der Windenergieanlage verliert, wodurch die Anlage nicht im Betriebsbereich gehalten werden kann. Zum Sicherheitssystem zählen dabei auch Einrichtungen, die einen ungewollten Anlauf der Windenergieanlage, z. B. bei Wartungsarbeiten oder dergleichen, verhindern.

Zum Sicherheitssystem gehört überdies zumeist eine so genannte Sicherheitskette, wobei die Sicherheitskette (englisch: safety chain) eine zentrale Einrichtung der Windenergieanlage ist. Bei einer Überschreitung sicherheitsrelevanter Grenzwerte werden durch die Sicherheitskette, unabhängig vom Betriebsführungssystem, die Schutzeinrichtungen ausgelöst. Schutzeinrichtungen in diesem Zusammenhang sind das aerodynamische und/oder das mechanische Bremssystem, die Einrichtungen zur Netztrennung des Generators oder des Generator-Umrichter-Systems sowie die Notaus-Schutzeinrichtungen bzw. -schütze und der Hauptschalter.

Überdies ist aus DE-U-20 2005 014 629 eine Sicherheitseinrichtung für eine Windenergieanlage bekannt. Weiterhin ist in DE-C-101 15 267 ein Verfahren zur Überwachung einer Windenergieanlage sowie eine Windenergieanlage offenbart.

In DE-A-199 48 194 (entspricht US-A-2004/236538) ist ein Verfahren zur akustischen Überwachung von Windenergieanlagen offenbart, wobei anhand einer Geräuscherkennung und eines Vergleichs mit Referenzgeräuschen Fehler frühzeitig erkannt werden, so dass Folgeschäden an der Windenergieanlage vermieden werden. Sind die Abweichungen zwischen dem Geräusch-Betriebsspektrum und dem Referenzspektrum größer als ein vorgegebener Schwellwert, so wird die Windenergieanlage gegebenenfalls abgeschaltet. Die Auswertung der aufgenommenen Geräusche kann an einer Fernüberwachungszentrale ausgeführt werden.

Außerdem ist in US-A-2005/107989 ein Verfahren zum Sammeln und Berichtigen von Betriebsdaten einer Windkraftfarm mittels eines Computers bzw. eines Computersystems offenbart.

Überdies offenbart WO-A-90/07823 ein Regelungs- und Steuerungssystem für eine Windkraftanlage, so dass auf die Windenergieanlage einwirkende Parameterwerte des Betriebs aufgenommen und für die Betriebsführung der Windenergieanlage berücksichtigt werden. Hierdurch soll eine sichere Abgabe elektrischer Energie mit konstanter Spannung und stabiler Phasenlage gewährleistet werden.

Darüber hinaus ist in DE-U-200 21 970 eine Einrichtung zur Überwachung des Zustandes von Rotorblättern an Windenergieanlagen beschrieben, wobei anhand von akustischen Messungen Frequenz- und Amplituden-Spektren sowie Spektrenformen oder -banden ausgewertet werden, um beispielsweise auftretende Schwachstellen oder Schadstellen an der Oberfläche und in den Rotorblättern zu erfassen. Bei Erreichen kritischer Werte werden die Rotorblätter verstellt, so dass keine Windkräfte mehr auf die Rotorblätter einwirken und die Windenergieanlage heruntergefahren wird.

US-A-5 278 773 offenbart ferner ein modulartig aufgebautes Steuerungssystem zur Steuerung einer Windenergieanlage, wobei eine vorbestimmte Hierarchie ausgebildet ist.

Es ist Aufgabe der vorliegenden Erfindung, einen sicheren Betrieb einer Windenergieanlage, insbesondere nach einer durch eine Sicherheitskette ausgelösten Sicherheitsausschaltung, zu gewährleisten.

Die Aufgabe wird gelöst durch ein Verfahren zum Betreiben einer Windenergieanlage, wobei die Windenergieanlage nach Auslösen eines Abschaltsignals von einer, einem Betriebsführungssystem logisch übergeordneten Sicherheitsabschalteinrichtung abgeschaltet wird oder ist, das dadurch weitergebildet wird, dass die Windenergieanlage mittels einer von der Windenergieanlage räumlich getrennten bzw. externen Bedieneinrichtung nach einer Abschaltung zum Betrieb freigegeben wird, wobei die Bedieneinrichtung zur Fernbedienung der Windenergieanlage vorgesehen ist, und wobei eine Sperreinrichtung an der Windenergieanlage vorgesehen ist, wobei bei Aktivierung der Sperreinrichtung eine Freigabe der Windenergieanlage mittels der Bedieneinrichtung gesperrt wird oder ist.

Gemäß der Erfindung wird der zeitnahe Wiederanlauf einer Windenergieanlage nach einer Sicherheitsabschaltung möglich. Hierbei verfügt die Windenergieanlage über einen Rotor mit mindestens einem Rotorblatt, ein Bremssystem mit einer Hilfsenergieversorgung sowie ein Sicherheitssystem mit einer Sicherheitssensorik und mindestens einem Notausschalter und eine Steuerungseinrichtung mit einem Speicher zur Aufzeichnung von Betriebsdaten. Die Steuereinrichtung ist hierbei mit der von der Windenergieanlage räumlich getrennten bzw. externen Bedieneinrichtung, beispielsweise in einer Fernüberwachungszentrale, zur (Wieder-)Inbetriebnahme der Windenergieanlage verbunden. Die Verbindung zwischen der Windenergieanlage und der Bedieneinrichtung, die nicht Bestandteil der Windenergieanlage bzw. die nicht direkt oder unmittelbar an der Windenergieanlage vorgesehen oder angeordnet ist, kann temporär für einen vorbestimmten Zeitraum, beispielsweise während der Abschaltphase der Windenergieanlage, hergestellt werden oder sein. Selbstverständlich ist es im Rahmen der Erfindung möglich, dass die Windenergieanlage dauerhaft mit der Bedieneinrichtung online in der Fernüberwachungszentrale verbunden ist.

Durch die Bedieneinrichtung wird eine Fernbedienung der Windenergieanlage möglich, wobei nach einer entsprechenden positiven Prüfung aller wesentlichen Betriebsdaten, die an der Bedieneinrichtung verfügbar sind bzw. an die Bedieneinrichtung nach der Sicherheitsabschaltung übermittelt werden, ein Wiederanlauf der Windenergieanlage initiiert bzw. ausgelöst bzw. gestartet wird. Dazu wird nach einer ausgelösten Sicherheitsabschaltung beispielsweise automatisch eine Fernüberwachungszentrale, in der die Bedieneinrichtung sich befindet, benachrichtigt.

Die Sicherheitsabschalteinrichtung ist eine dem Betriebsführungssystem logisch übergeordnete Einrichtung, welche unabhängig von der sonstigen Betriebsführung die Einhaltung sicherheitskritischer Grenzwerte der Windenergieanlage überwacht und bei Überschreitung eines dieser Grenzwerte eine Sicherheitsabschaltung auslöst. Dies ist insbesondere dann erforderlich, wenn das Betriebsführungssystem der Windenergieanlage bei schweren Störfällen nicht in der Lage ist, die Windenergieanlage im normalen Betriebsbereich zu halten. Auch im Falle eines Versagens des Betriebsführungssystems hält die Sicherheitsabschalteinrichtung die Windenergieanlage in einem sicheren Anlagenzustand.

Eine Sicherheitsabschaltung einer Windenergieanlage kann vor allem aufgrund von Überdrehzahlen, Vibrationen, Fehlern in der Steuerungshardware und/oder Steuerungssoftware sowie bei übermäßiger Kabelverdrillung im Turmkopf ausgelöst werden. Hierzu verfügt die Sicherheitskette an der Windenergieanlage beispielsweise über eine verkabelte, insbesondere hartverdrahtete, Schaltung, in der sämtliche Kontakte zum Auslösen eines "Notaus" einer Notausschalteinrichtung oder eines "Sicheraus" einer Sicherausschaltung in Reihe geschaltet sind.

Zum Auslösen eines "Sicheraus" verfügt die Sicherheitskette über Kontakte zu einem Überdrehzahlschaltgerät des Rotors sowie zur Generatordrehzahl, einem Rüttelschalter usw. Durch die Sicherheitsabschaltung wird sichergestellt, dass die Windenergieanlage auch ohne Mitarbeiter bzw. Bedienpersonal oder Wartungspersonal vor Ort nicht wieder frei geschaltet wird, falls ein systemkritischer Fehler vorliegt.

Zum Auslösen eines "Notaus" sind beispielsweise Notaustaster an der Topbox, in der Rotornabe, in der Nähe des Rotorlagers und im Turmfuß am Umrichterschrank sowie ein Service-Schalter, welcher beispielsweise zur Wartung des Blattverstellsystems genutzt wird, vorgesehen.

Nach Auslösen der Sicherheitskette besteht gemäß der Erfindung nunmehr der Vorteil darin, dass die Sicherheitskette über eine Fernbedienung bzw. Fernsteuerung in Form der räumlich von der Windenergieanlage vorgesehenen Bedieneinrichtung zurückgesetzt wird. Hierdurch wird ein sozusagen manueller Reset der Windenergieanlage aus der Ferne, d. h. ohne dass ein manueller Eingriff an der Windenergieanlage selbst erfolgt, durchgeführt. Die Sicherheitskette verfügt, wie an sich bekannt, über eine entsprechende Sensorik bzw. entsprechende Sensoren für die Überdrehzahlen, Vibrationen, Steuerung ("Watch dog"-Funktion) sowie ggf. für Kabeltwist.

Nach dem Auslösen des Sicherheitssystems kann der Rotor, insbesondere vorzugsweise unter Übergehung der Betriebsführungseinrichtung, abgebremst werden. Die Betriebsführungseinrichtung kann allerdings auch Teil des Sicherheitssystems sein bzw. das Sicherheitssystem kann Teil der Betriebsführungseinrichtung sein so dass die Betriebsführungseinrichtung nicht notwendigerweise für das Bremsen nach Auslösen des Sicherheitssystems übergangen werden muss.

Vor der Wiederinbetriebnahme nach einer Sicherheitsabschaltung werden ein oder mehrere Prüfschritte in der Fernüberwachungszentrale ausgeführt. Hierbei handelt es sich bevorzugt um ein Auslesen des Fehlerspeichers, eine Überprüfung, dass keine Personen vor Ort sind (Personensicherheit), eine visuelle Außeninspektion der Windenergieanlage durch wenigstens eine Kamera sowie eine visuelle Inspektion, insbesondere der rotierenden Teile des Triebschranks, mittels wenigstens einer Kamera um sicherzustellen, dass sich alle inneren und äußeren Anlagenkomponenten an ihrem Platz befinden und funktionsfähig sind. Diese Prüfung darf nur von einem eingeschränkten Kreis erfahrener sowie autorisierter Personen in der Fernüberwachungszentrale durchgeführt werden, die über entsprechende Zugriffsrechte zu den Betriebsdaten sowie zur Bedieneinrichtung verfügen, wobei nach positiver Prüfung der Betriebsdaten die Windenergieanlage zum Betrieb nach der Sicherheitsabschaltung freigegeben wird. Durch die ausgewählten Zugriffsrechte bzw. die Autorisierung von vorbestimmten Personen wird gewährleistet, dass nicht aus Versehen oder von unerfahrenen Personen ein Reset der Windenergieanlage ausgeführt wird.

Darüber hinaus werden vor der Wiederinbetriebnahme der Windenergieanlage auch die Blattverstellsysteme als primäres und sekundäres Bremssystem sowie deren Hilfsenergieversorgungen (Pitchbatterien) geprüft, wobei diese Überprüfungen auch automatisch durch das Betriebsführungssystem erfolgen können. Optional kann im Inneren der Nabe, beispielsweise mit einer schwenkbaren Kamera, z.B. einer Webcam, sichergestellt werden, dass eine Blattverstellung nicht nur durch lose Nabeneinbauten blockiert oder schwergängig ist. Darüber hinaus stellt eine Überprüfung der Netzparameter sicher, dass eine generierte elektrische Leistung an das Netz abgegeben werden kann. Somit wird die Gefahr einer Überdrehzahl nahezu ausgeschlossen.

Eine visuelle Außeninspektion der Windenergieanlage bzw. deren Einzelteile stellt eine generelle Integrität der Gesamtstruktur, insbesondere auch der Rotorblätter, sicher. Bevorzugt erfolgt dies durch eine Kamera auf einer benachbarten Windenergieanlage. Alternativ kann auch die Beobachtung durch eine auf dem hinteren Gondelteil, evtl. auch auf einem Ausleger, befestigte Kamera erfolgen, wobei die Rotorblätter dann bevorzugt durch langsames Trudeln des Rotors durch den Sichtbereich der Kamera geführt werden.

Insbesondere werden auch im Gondelinneren alle rotierenden Teile, z. B. Rotorwelle oder Achszapfen, bei Getriebemaschinen die Kupplung zum Getriebe sowie der Getriebeausgang, die mechanische Bremse, die Generatorkupplung, der Generator und ggf. der Generatorspalt sowie eine Schleifringeinheit, visuell untersucht. Außerdem wird die strukturelle Integrität weiterer Komponenten in der Gondel, wie z. B. Schaltschränke, Trafo, Umrichter, Azimutsystem, Generator- und Getriebekühler, geprüft. Sofern das Leistungsmodul im Turmfuß oder in einer separaten Trafostation untergebracht ist, werden ebenfalls im Rahmen der Erfindung dort weitere Kameras angeordnet.

Nach einer Freigabe der Windenergieanlage durch die Bedieneinrichtung werden in einer bevorzugten Ausbildung die rotierenden Teile der Windenergieanlage beim langsamen Hochlaufen des Triebstrangs visuell überwacht, um eventuelle Unwuchten oder Vibrationen zu erkennen. Um eine ausreichend hohe Bildübertragungsrate sicherzustellen, ist ggf. eine offline-Datenübertragung an die Fernüberwachungszentrale mit der Bedieneinrichtung erforderlich, so dass während eines Hochlaufens der Windenergieanlage Betriebsdaten (unterhalb der Nenndrehzahlen) aufgezeichnet werden. Nachfolgend wird die Maschine wieder stillgesetzt oder in einem unkritischen Zustand gehalten, so dass ausreichend Zeit für eine Übertragung oder Begutachtung der Daten in der Fernüberwachungszentrale gegeben ist. Erst nach einer weiteren positiven Prüfung erfolgt die Freigabe der Windenergieanlage für den Normalbetrieb.

Durch die genannten Überwachungsmaßnahmen wird neben einer Massenunwucht auch eine aerodynamische Unwucht ausgeschlossen. Darüber hinaus werden grobe Blattwinkelasymmetrien anhand der installierten Kameras in der Nabe erkannt, wobei feinere Asymmetrien durch eine Softwareüberwachung auf Basis einer Istwertsensorik ausgeschlossen werden. Eine grobe Fehlstellung der Windnachführung kann überdies durch eine auf die Windfahne gerichtete Kamera oder durch Schwenken der vorhandenen Außenkameras auf die Windmesssensorik ausgeschlossen werden. Hierbei wird auch auf visuelle Weise eine Vereisung der Windsensoren oder andere Schäden der Windsensoren ausgeschlossen. Ferner kann eine übermäßige Kabelverdrehung mittels der installierten Kameras bzw. Sensorik sowie einem Kabelendschalter geprüft werden.

Die Vorteile der Erfindung bestehen darin, dass eine Stillstandszeit nach einer Sicherheitsabschaltung durch die Sicherheitskette verkürzt wird, da per Fernüberwachung bzw. Fernbedienung mittels der Bedieneinrichtung die Windenergieanlage zurückgesetzt wird (Reset), ohne dass Mitarbeiter vor Ort die Windenergieanlage manuell zurücksetzen. Dies ist insbesondere dann von Wichtigkeit, wenn die Sicherheitskette durch Fehlauslösung, z.B. durch einen Sensorfehler oder einen Kontaktfehler, ausgelöst wurde. Durch das Fernreset wird die Personensicherheit sogar erhöht, da das Bedienpersonal vor Ort nicht in die Maschinengondel aufsteigen muss, was ferner zu Zeitverzögerungen führt, da ein derartiger Aufstieg sehr zeitaufwendig ist. Vielmehr wird die Windenergieanlage freigeschaltet, ohne dass Bedienpersonal vor Ort die Windenergieanlage inspiziert hat. Weiterhin ist das Personal in der Fernüberwachung wesentlich geübter in der Bewertung der aufgezeichneten Betriebsdaten als das Service-Personal vor Ort, welches vornehmlich mit Wartungs- und Reparaturarbeiten befasst ist.

Sofern eine Analyse in der Fernüberwachungszentrale ergeben hat, dass kein Zustand an der Windenergieanlage vorliegt, der die Anlage oder deren Hauptkomponenten gefährdet, wird über die Bedieneinrichtung die Sicherheitskette zurückgesetzt, wobei es nicht möglich ist, die Sensoren der Sicherheitskette zu umgehen. Damit wird sichergestellt, dass die Sicherheitskette nur zurückgesetzt werden kann, wenn alle Sensoren fehlerfrei sind.

Gemäß einer bevorzugten Ausführungsform ist vorgesehen, dass nach der Abschaltung und vor der Freigabe der Windenergieanlage die Windenergieanlage anhand von vorbestimmten, insbesondere aktuellen, Betriebsdaten über und/oder von der Windenergieanlage geprüft wird. Dadurch wird die Funktionsfähigkeit der Windenergieanlage überprüft. Hierzu werden die entsprechenden Daten bzw. Bilddaten vorzugsweise aktualisiert an die Bedieneinrichtung übertragen. Gleichzeitig werden zur Überprüfung der Betriebsdaten auch die Fehlerspeicher an der Windenergieanlage ausgelesen. Insbesondere wird nach und/oder während der Abschaltung der Windenergieanlage die Anwesenheit von Personen an und/oder in der Windenergieanlage geprüft, so dass nur dann die Windenergieanlage nach einer Sicherheitsabschaltung zum Betrieb freigegeben wird, wenn keine Personen sich in der Nähe oder in der Windenergieanlage aufhalten. Die Erkennung, ob sich Mitarbeiter oder Bedienpersonal vor Ort befinden, erfolgt vorzugsweise automatisch. Dazu sind beispielsweise Bewegungsmelder, Lichtschranken, Tür- oder Lukenschließfunktionen sowie Schalter im Steigschutz auf den Turmplattformen sowie in der Befahranlage vorgesehen. Sofern anhand der entsprechenden Sensoren festgestellt wird, dass sich Personen in oder an der Windenergieanlage aufhalten, ist es nicht möglich, eine Freigabe der Anlage zum Wiederanlauf zu geben.

In einer bevorzugten Ausgestaltung wird die Freigabe der Windenergieanlage dokumentiert, wobei die Dokumentation der Freischaltung mit Datum, Uhrzeit sowie Fehlerkennung in Form eines Fehlercodes und nach Möglichkeit mit Angaben zur autorisierten Person, die nach der Prüfung der sicherheitsrelevanten Daten die Windenergieanlage aus der Ferne zurückgesetzt hat, erfolgt.

Überdies ist bevorzugt, wenn die Windenergieanlage nach Entsperrung eines, insbesondere personengebundenen und/oder funktionsfehlergebundenen und/oder hardwaregebundenen, Sicherheitscodes zum Betrieb freigegeben wird. Hierbei wird nach Eingabe eines entsprechenden Sicherheitscodes an der Bedieneinrichtung der Zugang nur einem beschränkten, fachkundigen Personenkreis ermöglicht, der die Autorisierung besitzt, eine Windenergieanlage nach einer Sicherheitsabschaltung freizugeben. Die Sicherheitscodes können im vorliegenden Fall sowohl personengebunden sein, d. h. dass nur besonders autorisierte Personen die Freigabe erteilen können, als auch fehlergebunden sein, so dass nach der Erkennung eines Fehlers nur unter Zuhilfenahme eines speziellen Sicherheitscodes sich der Fehler über die dann frei geschaltete Bedieneinrichtung beheben lässt.

Zu den personengebundenen Sicherheitscodes zählen auch hardwaregebundene Ausführungsformen, z. B. an der Bedieneinrichtung einsteckbare Hardware-Dongle (Kopierschutzstecker) oder zu betätigende Schlüsselschalter.

Im Rahmen der Erfindung ist es ebenfalls denkbar, dass zur Erhöhung der Sicherheit mehrere Sicherheitscodes oder Autorisierungen nach Art einer Hierarchie vorhanden sind, so dass beispielsweise nach einer ersten Autorisierung in der Fernüberwachungszentrale die Anlage geprüft wird und erst nach einer positiven Prüfung die Eingabe einer weiteren Autorisierung u.U. von einer weiteren Person erforderlich ist, um die Windenergieanlage wieder in Betrieb zu nehmen.

Gemäß einer vorteilhaften Ausgestaltung wird vorgeschlagen, dass nach und/oder während einer Abschaltung der Windenergieanlage die Bedieneinrichtung benachrichtigt wird. Hierdurch wird automatisch nach einer Sicherheitsabschaltung eine Meldung in der Fernüberwachungszentrale abgegeben, wobei bei der Fehlermeldung auch eine Fehlerliste beigefügt sein kann. Im Rahmen der Erfindung ist es möglich, dass eine derartige Benachrichtigung auch über entsprechende drahtlose Kommunikation, z.B. SMS oder dergleichen, erfolgt.

In einer vorteilhaften Weiterbildung des Verfahrens wird vorgesehen, dass die Anzahl der Freigaben der Windenergieanlage innerhalb einer vorbestimmten Zeitdauer begrenzt wird oder ist, so dass nach Überschreiten der Freigaben innerhalb der Zeitdauer eine weitere Freigabe nicht möglich ist. Hierdurch wird die Sicherheit einer Windenergieanlage erhöht, da nach Überschreiten der zulässigen Anzahl das Servicepersonal vor Ort zunächst eine Inspektion oder Sicherheitsprüfung der Windenergieanlage durchführen muss.

Für eine weitere Erhöhung der Sicherheit sieht eine vorteilhafte Weiterbildung vor, dass im Betriebsführungssystem eine Checklogik hinterlegt ist, die die verschiedenen, o.g. Überprüfungen miteinander verknüpft und das Fernreset erst dann ermöglicht, wenn alle Prüfungen erfolgreich durchgeführt und bestätigt wurden. Insbesondere kann ein Teil der erforderlichen Prüfungen, z.B. die Überprüfung der Netzparameter oder des Zustandes der Hilfsenergieversorgung, von dem Betriebsführungssystem automatisch oder halbautomatisch durchgeführt werden. Die abschließende Freigabe des Fernresets erfolgt jedoch grundsätzlich durch eine besonders fachkundige Person.

Darüber hinaus wird die Aufgabe gelöst durch ein Energieversorgungssystem mit wenigstens einer Windenergieanlage, das dadurch weitergebildet wird, dass eine, von der Windenergieanlage räumlich getrennte Bedieneinrichtung zur Fernbedienung der Windenergieanlage derart vorgesehen ist, dass mittels der Bedieneinrichtung die Windenergieanlage nach einer, von einer einem Betriebsführungssystem logisch übergeordneten Sicherheitsabschalteinrichtung ausgelösten, Sicherheitsabschaltung zum Betrieb freigegeben wird oder ist, und wobei eine Sperreinrichtung an der Windenergieanlage vorgesehen ist, wobei bei Aktivierung der Sperreinrichtung eine Freigabe der Windenergieanlage mittels der Bedieneinrichtung gesperrt wird oder ist.

Durch die Sperreinrichtung an der Windenergieanlage wird ein aktiver Zugriff der Bedieneinrichtung auf die Sicherheitskette gesperrt, so dass erst nach Freigabe durch die Sperreinrichtung ein Reset der Sicherheitskette bzw. der Sicherheitsabschaltung durch die Bedieneinrichtung möglich ist.

Vorzugsweise ist die Sperreinrichtung als Service-Schalter ausgebildet. Die Sperreinrichtung ist als Serviceschalter ausgeführt und dient dazu, dass das Wartungspersonal vor Ort sicherstellen kann, dass eine zu Wartungszwecken vor Ort ausgelöste Sicherheitskette nicht versehentlich durch ein Reset von der Bedieneinrichtung aufgehoben wird. Der Serviceschalter kann auch als "Manueller Stop"-Schalter, beispielsweise im Turmfuß und/oder in der Gondel der Windenergieanlage positioniert, ausgeführt sein, wobei der Schalter dann die Doppelfunktion "Stoppen der Windenergieanlage" und "Aktivieren der Sperreinrichtung" beinhaltet.

Außerdem ist es bevorzugt, wenn bei Aktivierung der Sperreinrichtung der Zugriff der Bedieneinrichtung auf die Reset-Funktion einer Sicherheitskette und/oder eines Sicherheitssystem der Windenergieanlage gesperrt wird oder ist. Insbesondere wird an der Bedienungseinrichtung die Resetfunktion der Sicherheitskette bzw. des Sicherungssystems gesperrt. Hierzu ist entsprechend eine Einrichtung zur Sperrung des aktiven Zugriffs, insbesondere zur Sperrung des Resets einer Sicherheitsabschaltung, an der Bedieneinrichtung vorgesehen.

Die Aktivierung der Sperreinrichtung kann alternativ auch dadurch erfolgen, dass sich das Wartungspersonal in der Windenergieanlage über ein Bedienterminal in den Betriebsführungsrechner einloggt. Diese Aktivierung kann beispielsweise von Bedienterminals im Turmfuß oder in der Gondel der Windenergieanlage erfolgen.

Eine weitere Ausführungsform der Erfindung sieht vor, dass bei einem Reset der Sicherheitskette bzw. einer Freigabe durch die Bedieneinrichtung ein akustisches und/oder optisches Signal an der Windenergieanlage abgegeben wird. Insbesondere in den zu Wartungszwecken von Personen aufgesuchten Bereichen, z.B. Turminnenraum, Maschinengondel, Rotornabe, wird durch ein derartiges Signal eventuell doch vorhandenes Personal gewarnt. Alternativ oder zusätzlich kann auch ein Signal auf ein von Personen im Bereich der Windenergieanlage grundsätzlich mitzuführendes Empfangsgerät (Funkmeldeempfänger, "Pieper") gesendet werden. Durch diese Maßnahmen kann das Risiko für Personen an der WEA, die durch die o.g. Maßnahmen fehlerhaft nicht erkannt wurden, bei einem Fernreset minimiert werden.

Ferner wird erfindungsgemäß das Energieversorgungssystem gemäß dem voranstehend beschriebenen Verfahren betrieben.

Die Aufgabe wird weiterhin gelöst durch eine Windenergieanlage mit einem Betriebsführungssystem und mit einer, dem Betriebsführungssystem logisch übergeordneten Sicherheitsabschalteinrichtung zum Auslösen eines Abschaltsignals, so dass die Windenergieanlage nach Auslösen eines Abschaltsignals abgeschaltet wird oder ist, wobei die Windenergieanlage mit einer voranstehend beschriebenen Sperreinrichtung ausgebildet oder ausgestattet ist, wobei bei Aktivierung der Sperreinrichtung eine Freigabe der Windenergieanlage mittels einer Bedieneinrichtung zur Fernbedienung der Windenergieanlage nach einer Sicherheitsabschaltung durch eine Sicherheitskette oder ein Sicherheitssystem gesperrt wird oder ist. Dadurch wird ein Reset nach einer Sicherheitsabschaltung gesperrt. Erst nach Deaktivierung der Sperreinrichtung wird ein Reset bzw. eine Freigabe der Windenergieanlage möglich.

Ferner wird die Windenenergieanlage oder das Energieversorgungssystem dadurch weiter gebildet, dass nach einer Aktivierung die Sperreinrichtung nach Eingabe eines Password oder Übermittlung einer Autorisierung die Bedieneinrichtung zur Freigabe der Windenergieanlage entsperrt ist oder wird. Nach einer Überprüfung der wesentlichen Betriebsdaten der Anlage durch einen besonders qualifizierten Mitarbeiter, beispielsweise aus der Ferne, erfolgt bei positiver Prüfung von wesentlichen Betriebsdaten eine Freigabe der Windenergieanlage zum Wiederanlauf aus der Ferne unter Verwendung eines besonders geschützten Zugriffsrechts von vorbestimmten fachkundigen Personen.

Zusätzlich oder als Alternative kann bei der Windenenergieanlage oder dem Energieversorgungsystem vorgesehen sein, dass nach einer Aktivierung die Sperreinrichtung nach Überprüfung der Anwesenheit bzw. Abwesenheit von Personen in und/oder an der Windenergieanlage und nach festgestellter Abwesenheit von Personen die Bedieneinrichtung zur Freigabe der Windenergieanlage entsperrt ist oder wird. Dabei werden die folgenden Schritte ausgeführt: Überprüfen, dass sich kein Mitarbeiter in und/oder an der Windenergieanlage aufhält und/oder dass kein "Notaus" erfolgt ist, Überprüfen von, insbesondere wesentlichen, Betriebsdaten der Anlage durch einen besonders qualifizierten Mitarbeiter aus der Ferne in der Fernüberwachungszentrale und bei positiver Prüfung Freigabe der Anlage zum Wiederanlauf aus der Ferne.

Eine weitere Lösung der Aufgabe besteht darin, dass die Windenergieanlage mit einer Sicherheitskette dadurch weitergebildet wird, dass ein Reset-Schalter vorgesehen ist, der nach Auslösen einer Sicherheitsabschaltung der Windenergieanlage mittels oder in Zusammenwirken mit einer von der Windenergieanlage räumlich getrennten Bedieneinrichtung zur Fernbedienung der Windenergieanlage betätigt wird oder ist oder betätigbar ist, derart, dass die Windenergieanlage nach der Sicherheitsabschaltung zum Betrieb freigegeben wird.

Erfindungsgemäß weist damit eine Sicherheitskette, durch die eine Sicherheitsabschaltung der Windenergieanlage erfolgt, eine Art fernbedienbaren Reset-Schalter auf, der im Zusammenwirken mit der Bedieneinrichtung in einer Fernüberwachungszentrale geschaltet wird bzw. geschaltet werden kann, so dass nach einer eingeleiteten Sicherheitsabschaltung die Wiederinbetriebnahme der Windenergieanlage freigegeben wird, nachdem in der Fernüberwachungszentrale an der Bedieneinrichtung mehrere Prüfungen durchgeführt wurden, ob die Windenergieanlage in einem funktionstüchtigen und fehlerfreien Zustand ist.

Die Sicherheitskette wird außerdem dadurch weitergebildet, dass wenigstens ein manuell betätigbarer Schalter einer Notausschalteinrichtung vorgesehen ist, derart, dass nach manuellem Betätigen des Schalters eine Sicherheitsabschaltung der Windenergieanlage ausgelöst wird. Durch das Betätigen von einem Schalter werden spannungsführende Teile der Windenergieanlage spannungslos geschaltet und/oder ein Bremsprogramm für die Rotorblätter der Windenergieanlage ausgelöst. Die Sicherheitsabschaltung durch die Notausschalteinrichtung wird insbesondere von Bedienpersonen oder Wartungspersonal an einer Windenergieanlage ausgelöst. Hierzu befinden sich mehrere manuell betätigbare Schalter beispielsweise in der Nähe von rotierenden Teilen, in der Topbox, in der Bodenbox, in der Nähe des Umrichters usw. Ein manuell betätigbarer Schalter ist darüber hinaus auch ein als Schlüsselschalter ausgeführter Serviceschalter, der mit einem Schlüssel nach manuellem Umdrehen eine Sicherheitsabschaltung der Windenergieanlage herbeiführt. Gemäß einer bevorzugten Ausführungsform ist weiterhin vorgeschlagen, dass wenigstens ein von einem Sensor betätigbarer Schalter einer Sicherausschalteinrichtung vorgesehen ist, derart, dass nach Betätigen des Schalters eine Sicherheitsabschaltung der Windenergieanlage ausgelöst wird.

Beispielsweise wird mit Hilfe von Sensoren eine Kabelverdrillung überwacht. Ferner wird die Vibration der Windenergieanlage erfasst sowie eine Überdrehzahl des Rotors als auch eine Überdrehzahl des Getriebes und der Controller mit Hilfe eines "Watch-Dogs" per Sensor erfasst. Hierbei werden insbesondere Teile in der Maschine überwacht, durch die etwaige Schäden in der Gondel entstehen könnten.

Weiterhin sind insbesondere der wenigstens eine Schalter der Notausschalteinrichtung bzw. mehrere Schalter der Notausschalteinrichtung und der wenigstens eine Schalter der Sicherausschalteinrichtung bzw. mehrere Schalter davon in Reihe geschaltet. Damit wird ein sicherer Betrieb der Sicherheitskette erreicht. Vorzugsweise verfügt die Sicherheitskette über mehrere Reset-Schalter, so dass neben dem Reset-Schalter, der durch die Bedieneinrichtung in der Fernüberwachungszentrale geschaltet wird, wenigstens ein weiterer Reset-Schalter vorgesehen ist. Derartige Reset-Schalter können manuell oder auch automatisch betätigt werden. Ein Beispiel für einen automatisch betätigbaren Reset-Schalter ist der Reset-Schalter für die Netzwiederkehr, wenn für eine sonst fehlerlose Windenergieanlage längere Zeit das Netz von der Windenergieanlage getrennt war.

Manuelle Taster als Reset-Schalter können beispielsweise in der Topbox oder in der Bodenbox als auch an anderen Stellen in der Windenergieanlage vorgesehen sein.

Die Reset-Schalter sind parallel zueinander geschaltet, um von jedem Reset-Schalter unabhängig ein Reset der Sicherheitskette zu ermöglichen.

Durch die Notausschalteinrichtung und/oder die Sicherausschalteinrichtung werden entsprechende Bremsprogramme für bewegliche Teile der Windenergieanlage ausgelöst. Um aus Gründen der Sicherheit nach Auslösen einer Sicherheitsabschaltung bzw. eines entsprechenden Schalters auch bei Versagen eines Relais ein Abfahren der Anlage zu gewährleisten, weisen die Notausschalteinrichtung und/oder die Sicherausschalteinrichtung bevorzugt jeweils wenigstens zwei Schalt-Relais auf.

Ferner wird oder ist gemäß einer Ausführungsform bei einer Notausschaltung durch die Notausschalteinrichtung eine Freigabe der Windenergieanlage durch die Bedieneinrichtung gesperrt. Nach einem Notaus ist ein Fern-Reset nicht möglich, bis das "Notaus" vor Ort deaktiviert wird.

Überdies zeichnet sich die Sicherheitskette dadurch aus, dass bei einer Notausschaltung durch die Notausschalteinrichtung der Rotor mittels, insbesondere mechanischer, Bremseinrichtungen zum Stillstand gebracht wird und/oder Bauteile spannungslos geschaltet werden. Bevorzugt werden, soweit technisch möglich, alle Bauteile spannungslos geschaltet.

Hingegen wird bei einer Sicherausschaltung durch die Sicherausschalteinrichtung der Rotor nur durch Bremseinrichtungen in einen lastarmen Betrieb oder Zustand, insbesondere Trudelzustand, gebracht.

Gemäß der Erfindung weisen die Notausschalteinrichtung und/oder die Sicherausschalteinrichtung eine unterschiedliche Form der Sicherheitsabschaltung auf: Bei der Sicherausschaltung wird die Anlage umgehend durch Ansteuerung der Bremssysteme, insbesondere der Blattverstellung, in einen sicheren Anlagenzustand überführt. Der Rotor wird jedoch nicht zum Stillstand gebracht, sondern verbleibt im lastarmen Trudelzustand. Weiterhin werden nicht alle Sy-steme stromlos geschaltet, z. B. bleibt das Windnachführungssystem aktiv. Außerdem ist ein erfindungsgemäßes Fernreset nach einer entsprechenden Prüfung möglich.

Bei der Notausschalteinrichtung wird zusätzlich die mechanische Bremseinrichtung direkt aktiviert, um den Rotor schnellstmöglichst zum vollkommenen Stillstand zu bringen. Weiterhin werden, soweit möglich, alle Bauteile spannungslos geschaltet, d.h. Systeme wie die Windnachführung werden deaktiviert. Ausgenommen sind lediglich Systeme wie die hilfsenergiegepufferte Blattverstellung, die auch bei Auslösung der Sicherheitskette elektrisch betrieben werden muss, um die Rotorblätter in die Brems- / Fahnenstellung zu verfahren.

Die Staffelung der beiden Sicherheitskettenfunktionen Notausschalteinrichtung und/oder die Sicherausschalteinrichtung wird durch die Reihenschaltung mit dazwischen liegendem Abgriff durch die Notaus-Relais realisiert.

Bevorzugterweise ist ferner für die Sicherheitskette eine, insbesondere unterbrechungsfreie, Spannungsversorgung vorgesehen, wodurch ein zuverlässiger Betrieb der Windenergieanlage bzw. der Sicherheitskette erzielt wird.

Außerdem ist es günstig, wenn die Sicherheitskette als verdrahtete, insbesondere hartverdrahtete, Schaltung ausgebildet ist. Durch diese Maßnahme wird maximale Sicherheit auch nach Blitzeinschlägen gewährleistet.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage;
- Fig. 2: ein schematisches Blockdiagramm wesentlicher Komponenten einer Windenergieanlage und
- Fig. 3: ein schematisches Schaltbild einer Sicherheitskette.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

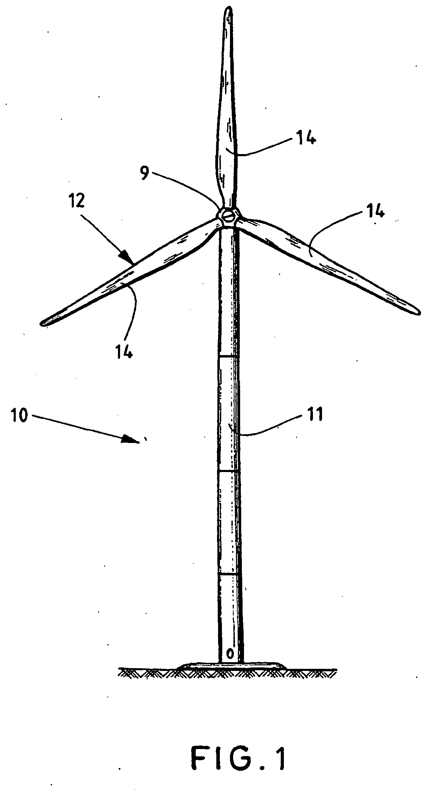

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe 9 angebracht sind. Die Rotornabe 9 ist mit einer Rotorwelle 13 verbunden. Bei Windeinfall dreht der Rotor 12 in an sich bekannter Weise. Hierdurch kann Leistung von einem an den Rotor 12 bzw. an den über die Rotornabe 9 und die Rotorwelle 13 angeschlossenen Generator erzeugt werden und in ein Verbrauchernetz abgegeben werden.

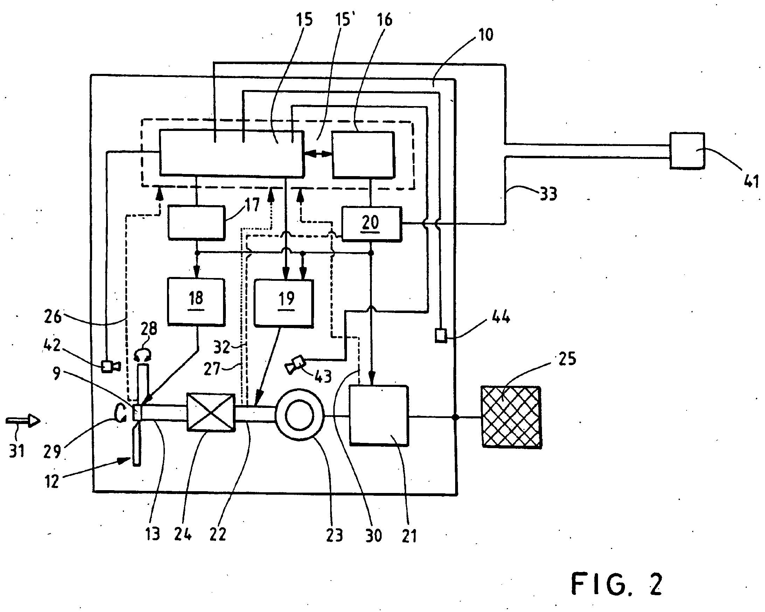

Fig. 2 zeigt schematisch wesentliche Komponenten der Windenergieanlage 10. Eine Betriebsführung 15, die auch als Betriebsführungseinrichtung oder Betriebsführungssystem bezeichnet werden kann, steuert und/oder regelt den Betrieb der Windenergieanlage 10. Nebengeordnet zu der Betriebsführung 15 ist eine Sicherheitsüberwachung 16, die mit einer Sicherheitskette 20 verbunden ist. Die Sicherheitskette 20 umfasst beispielsweise einen Vibrationsmelder, einen manuellen (Notaus-) Schalter und ein Drehzahlschaltrelais. Die Sicherheitskette 20 dient dazu, dass bei Vorliegen eines sicherheitsrelevanten Ereignisses, beispielsweise zu großen Vibrationen oder das Betätigen des Notausschalters durch eine Bedienperson, die Windenergieanlage in einen unkritischen Zustand heruntergefahren wird. Die Sicherheitskette 20 kann als Hardware-Kette ausgestaltet sein.

Beim Auslösen der Sicherheitskette 20 wird, was durch den Pfeil zu den elektrischen Komponenten 21 angedeutet ist, der Generator 23 vom Netz 25 genommen und die Rotorwelle 13 bzw. die schnelle Welle 22 abgebremst, beispielsweise über die Blattverstellung 18 bzw. die mechanische Bremse 19 oder auch, was nicht dargestellt ist, unmittelbar unter Umgehung einer oder mehrerer Regel- oder Steuervorrichtungen wie die Regeleinrichtung 17. Die Sicherheitsüberwachung 16 kann auch derart ausgestaltet sein, dass diese die Betriebsführung 15 auf Funktionalität überprüft. Die Sicherheitsüberwachung 16 ist insofern als eine Art Watch-Dog vorzugsweise ausgeführt. Die Betriebsführung 15' kann, wie gestrichelt dargestellt ist, auch die Sicherheitsüberwachung 16 umfassen. Es handelt sich dann um eine Betriebsführung 15' mit integrierter Sicherheitsüberwachung 16.

Darüber hinaus ist die Sicherheitskette 20 mit dem Betriebsführungssystem bzw. der Betriebsführung 15, 15', die mit einer externen Bedieneinrichtung 41 bei einer Sicherheitsabschaltung verbunden wird oder ist. Die Bedieneinrichtung 41 befindet sich außerhalb der Windenergieanlage 10, beispielsweise in einer Fernüberwachungszentrale, Bedieneinrichtung 41. Nach Auslösen einer Sicherheitsabschaltung über die Sicherheitskette 20 wird eine Nachricht an die Bedieneinrichtung 41 gesandt, so dass in der Fernüberwachungszentrale registriert wird, dass die Windenergieanlage abgeschaltet worden ist.

Nach der Sicherheitsabschaltung wird eine Fernabfrage von wesentlichen Betriebsparametern vorgenommen, so dass anhand dieser Betriebsdaten geprüft werden kann, ob eine Wiederinbetriebnahme der still gesetzten Windenergieanlage 10 möglich ist. Dazu werden über externe Kameras 42 an der Gondel oder an einer benachbarten Windenergieanlage oder interne Kameras 43 visuelle Aufnahmen über die Betriebsführung 15, 15' an die Bedieneinrichtung 41 übermittelt.

Im Rahmen der Erfindung ist es möglich, dass nicht nur eine sondern mehrere Kameras 42 außerhalb der Gondel und innerhalb der Gondel an den sicherheitsrelevanten Stellen angeordnet sind, die entsprechende Bilddaten an die Bedieneinrichtung 41 übermitteln. Anhand der aktuellen Betriebsdaten bzw. Bilddaten werden entsprechende Prüfungen vom Bedienpersonal in der Fernüberwachungszentrale vorgenommen, wobei erst nach Feststellen einer ordnungsgemäßen Windenergieanlage 10 und nach Eingabe eines oder mehrerer entsprechender Sicherheitscodes an der Bedieneinrichtung 41 entsprechend autorisierte Personen ein Reset bzw. eine Freigabe der Windenergieanlage 10 nach einer Sicherheitsabschaltung erteilen können.

Ferner wird mittels entsprechender Sensoren an und in der Windenergieanlage 10 festgestellt, ob sich Personen an oder in der Windenergieanlage 10 aufhalten. Ein derartiger Sensor ist schematisch in Fig. 2 eingezeichnet und mit dem Bezugszeichen 44 versehen. Beispielsweise ist der Sensor 44 in Form eines Bewegungssensors oder dergleichen ausgebildet und mit der Betriebsführung 15, 15' verbunden.

Die Betriebsführung 15, 15' ist über entsprechende elektronische Datenleitungen mit einem Regler 17 und der Blattverstellung 18 verbunden und außerdem mit der mechanischen Bremse 19. Unter Blattverstellung 18 wird insbesondere ein Aktuator verstanden, der für eine Blattverstellung der Rotorblätter 14 sorgt. Entsprechend wird unter mechanischer Bremse 19 ein Aktuator verstanden, der dafür sorgt, dass die mechanische Bremse 19 in diesem Ausführungsbeispiel auf die schnelle Welle 22 wirkt. Die mechanische Bremse 19 kann auch auf die Rotorwelle 13 wirken, was allerdings nicht dargestellt ist.

Mit 26 ist eine Datenverbindung bezeichnet, die einen Rotorblattwinkel bzw. die Rotorblattwinkel der Rotorblätter 14 der Betriebsführung 15 bzw. 15' zuführt. Mit der Bezugsziffer 27 ist eine Datenverbindung dargestellt, die eine Ist-Drehzahl der schnellen Welle 22 der Betriebsführung 15 bzw. 15' zuführt. Darüber hinaus ist die Welle 22 bzw. ein Sensor an der Welle 22 mit der Sicherheitskette 20 über eine Verbindungsleitung 32 verbunden, wobei nach Erfassung von Überdrehzahlen über die Verbindungsleitung ein entsprechendes Signal von einem (hier nicht dargestellten) Sensor an die Sicherheitskette 20 übermittelt wird. In Folge dessen wird durch die Sicherheitskette 20 beispielsweise eine Sicherheitsabschaltung der Windenergieanlage ausgelöst. Mit 30 ist eine Datenleitung bezeichnet, die ein Störsignal, das in diesem Ausführungsbeispiel von elektrischen Komponenten 21 ausgeht, der Betriebsführung 15 bzw. 15' zuführt.

Die Kommunikation der Bedieneinrichtung 41 mit den Kameras 42, 43 sowie dem Sensor 44 in bzw. an der Windenergieanlage erfolgt im Ausführungsbeispiel in Fig. 2 über die Betriebsführung 15, 15' bzw. das Betriebsführungssystem. Alternativ kann auch hierfür eine zusätzliche Kommunikationseinrichtung vorhanden sein. Weiterhin könnte auch direkte Kommunikation zwischen den Kameras 42, 43 sowie dem Sensor 44 und der Bedieneinrichtung 41 erfolgen.

Nachdem durch die Sicherheitskette 20 eine Sicherheitsabschaltung ausgelöst wurde, wird eine entsprechende Nachricht bzw. ein Signal an die Bedieneinrichtung 41 über die Betriebsführung 15 gesendet. Alternativ kann auch eine direkte Verbindungsleitung 33 zwischen der Sicherheitskette 20 und der Bedieneinrichtung 41 vorgesehen sein. Danach kommuniziert die Bedieneinrichtung 41 über die Verbindungsleitung 34 mit der Betriebsführung 15, 15', um von dort aktuelle Betriebsdaten oder weitere Daten zu erhalten, die einer eingehenden Bewertung in der Fernüberwachungszentrale unterzogen werden.

Der Betrieb der Windenergieanlage 10 ist wie folgt. Durch Einfall von Wind (Bezugszeichen 31) wird der Rotor 12 gemäß der Rotationsrichtung 29 gedreht. Hierdurch dreht sich auch die Rotorwelle 9, die mit einem Getriebe 24 in einer Übersetzung von beispielsweise 1:100 die schnelle Welle 22 dreht. Hierdurch wird im Generator 23 eine elektrische Spannung generiert, die in den elektrischen Komponenten 21 geregelt, umgerichtet und/oder in eine Wechselspannung umgewandelt wird. Am Ausgang der elektrischen Komponenten 21 ist eine Verbindung zum Netz 25 vorgesehen, mit dem die Verbraucher mit Spannung bzw. elektrischer Leistung versorgt werden. Allgemein bekannte Regelungs- und Führungskonzepte von Windkraftanlagen sind beispielsweise in Kapitel 5 des Lehrbuches "Windkraftanlagen Systemauslegung, Netzintegration und Reglung" von Siegfried Heier, das oben angegeben ist, offenbart.

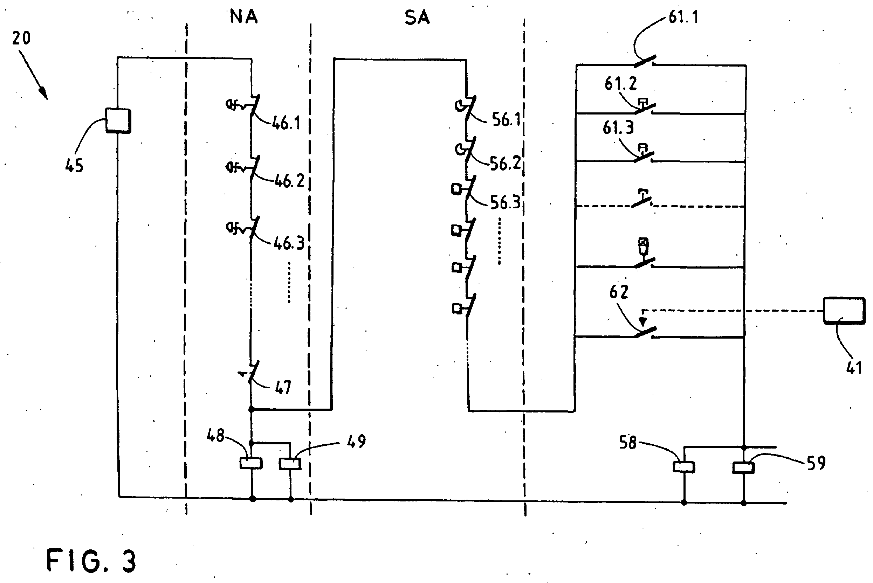

In Fig. 3 ist schematisch das Schaltbild einer Sicherheitskette 20, die in eine Windenergieanlage eingesetzt ist, beispielhaft dargestellt im stromlosen Zustand.

Die Sicherheitskette 20 ist eine verdrahtete, insbesondere hartverdrahtete, Schaltung, die eine unterbrechungsfreie Spannungsversorgung 45 aufweist. Derartige so genannte "USV"s sind dem Fachmann bekannt. Beispielsweise kann auch eine Batterie als Spannungsversorgung vorgesehen sein.

Angeschlossen an die Spannungsversorgung 45 sind bei einer Notausschalteinrichtung NA die in Reihe geschalteten manuellen Schalter 46.1, 46.2, 46.3, ...., die als Not-austaster an der Topbox, an der Bodenbox, im Turmfuß, und am Umrichterschrank sowie an anderen Stellen an und in der Windenergieanlage angeordnet sind. Darüber hinaus ist ein weiterer Schlüsselschalter 47 in Reihe zu den anderen manuell betätigbaren Schaltern 46.1, 46.2, 46.3, ...., vorgesehen, der mittels eines entsprechenden Schlüssels vom Wartungspersonal betätigt wird. Ein derartiger, auch Serviceschalter genannter, Schlüsselschalter 47 ist beispielsweise in der Topbox (Steuerschrank in Gondel) zur Wartung der Blattverstelleinrichtung vorgesehen.

Durch die Notausschalteinrichtung NA werden alle spannungsführenden Teile sowie alle drehenden Teile zum Halten gebracht. Die spannungsführenden Teile werden bei Betätigen der Notausschalteinrichtung NA soweit möglich spannungslos geschaltet.

Durch das Betätigen eines der Schalter 46.1, 46.2, 46.3, ...., 47 werden die Schalter geöffnet, so dass eine Sicherheitsabschaltung der Windenergieanlage erfolgt. Durch diesen "Notaus" werden die angeschlossenen Relais 48, 49 geöffnet (fail-safe-Anordnung).

Bei Unterbrechung der Schleife fallen die selbsthaltenden Relais 48, 49 ab, so dass eine Sicherheitsabschaltung erfolgt. Hierbei steuern beispielsweise die Relais 48, 49 die Bremsen der Windenergieanlage an und lösen z.B. ein Bremsprogramm aus.

Ferner sind in Reihe zu den manuell betätigbaren Schaltern 46.1, 46.2, 46.3, ...., 47 weitere Schalter 56.1, 56.2, 56.3, .... einer Sicherausschalteinrichtung SA wobei die Schalter der Sicherausschalteinrichtung SA mittels Sensoren geschaltet werden. Mittels der Sensoren für die Schalter 56.1, 56.2, 56.3, .... werden bewegliche Teile oder dergleichen in der Maschine überwacht. Beispielsweise wird mittels zweier Sensoren die Kabelverdrillung (im Uhrzeigersinn und entgegen dem Uhrzeigersinn) überwacht. Darüber hinaus findet eine ständige Überprüfung der Vibration, der Überdrehzahl des Rotors sowie des Getriebes sowie eine Überwachung des Betriebsführungssystems (watchdog) statt.

In Reihe zu den Schaltern 46.1, 46.2, 46.3, ....,47 und den weiteren Schaltern 56.1, 56.2, 56.3, .... sind das Selbsthalterelais 61.1 sowie verschiedene Reset-Schalter, 61.2, 61.3,..... parallel zueinander geschaltet, um nach einer Sicherheitsabschaltung durch die Notausschalteinrichtung NA oder die Sicherausschalteinrichtung SA die Wiederinbetriebnahme der Windenergieanlage zu ermöglichen. Hierzu sind verschiedene Reset-Schalter 61.2, 61.3, ..... vorgesehen. Diese Reset-Schalter 61.2, 61.3,..... können sowohl als mechanisch betätigbare Schalter an den entsprechenden Stellen, beispielsweise in einer Topbox, in der Bodenbox, ausgebildet sein.

Darüber hinaus gibt es auch einen Reset-Schalter für eine Netzwiederkehr. Während des ordnungsgemäßen Betriebs der Windenergieanlage ist der Selbsthaltungs-Schalter 61.1 geschlossen. Fig. 3 zeigt die Sicherheitskette 20 im stromlosen Zustand.

Als weiteren erfindungsgemäßen Reset-Schalter verfügt die Sicherheitskette 20 über einen Reset-Schalter 62, der mittels der schematisch in Fig. 3 eingezeichneten Bedieneinrichtung 41 einer Fernüberwachungszentrale aus der Ferne geschaltet wird. Durch Betätigen der sensorgeschalteten Schalter 56.1, 56.2, 56.3, .... wird eine Sicherheitsabschaltung ausgeführt, indem die Relais 58, 59 abfallen, so dass gemäß dem Erfindungsgedanken nach Prüfung in der Fernüberwachungszentrale mittels der Bedieneinrichtung 41 aus der Ferne der Reset-Schalter 62 betätigt wird, wodurch die Windenergieanlage 10 wieder in Betrieb genommen wird. Hierdurch wird die Sicherheitskette 20 zurückgesetzt, wenn alle Sensoren fehlerfrei sind. Die von der Sicherausschalteinrichtung SA eingeleitete Sicherheitsabschaltung führt ebenfalls entsprechende Bremsprogramme für die Teile der Windenergieanlage aus.

### Bezugszeichenliste

- 9: Rotornabe
- 10: Windenergieanlage
- 11: Turm
- 12: Rotor
- 13: Rotorwelle
- 14: Rotorblatt
- 15: Betriebsführung
- 15': Betriebsführung mit integrierter Sicherheitsüberwachung
- 16: Sicherheitsüberwachung
- 17: Regler
- 18: Blattverstellung
- 19: mechanische Bremse
- 20: Sicherheitskette
- 21: elektrische Komponenten
- 22: schnelle Welle
- 23: Generator (mit Läufer und Stator)
- 24: Getriebe
- 25: Netz
- 26: Datenverbindung
- 27: Datenverbindung
- 28: Winkelverstellung
- 29: Rotationsrichtung
- 30: Störsignal
- 31: Wind
- 32: Verbindungsleitung
- 33: Verbindungsleitung
- 34: Verbindungsleitung
- 41: Bedieneinrichtung
- 42: Kamera
- 43: Kamera
- 44: Sensor
- 45: Spannungsversorgung
- 46.1, 46.2, 46.3: Schalter
- 47: Schlüsselschalter
- 48: Relais (Notaus)
- 49: Relais (Notaus)
- 56.1, 56.2, 56.3: Schalter
- 61.1: Selbsthaltungsschalter
- 61.2, 61.3: Reset-Schalter
- 62: Reset-Schalter
- NA: Notausschalteinrichtung
- SA: Sicherausschalteinrichtung
- 58: Relais (Sicheraus)
- 59: Relais (Sicheraus)

## Patentansprüche

1. Verfahren zum Betreiben einer Windenergieanlage (10), die über einen Rotor mit mindestens einem Rotorblatt, ein Bremssystem mit einer Hilfsenergieversorgung sowie ein Sicherheitssystem mit einer Sicherheitssensorik und mindestens einem Notausschalter und eine Steuerungseinrichtung mit einem Speicher zur Aufzeichnung von Betriebsdaten verfügt, wobei die Windenergieanlage (10) nach Auslösen eines Abschaltsignals von einer, einem Betriebsführungssystem logisch übergeordneten Sicherheitsabschalteinrichtung (20), die unabhängig von der sonstigen Betriebsführung die Einhaltung sicherheitskritischer Grenzwerte der Windenergieanlage (10) überwacht und bei Überschreitung eines dieser Grenzwerte eine Sicherheitsabschaltung auslöst und im Falle eines Versagens des Betriebsführungssystems die Windenergieanlage in einem sicheren Anlagenzustand hält, abgeschaltet wird oder ist, wobei die Sicherheitsabschaltung aufgrund von Überdrehzahlen, Vibrationen, Fehlern in der Steuerungshardware und/oder Steuerungssoftware sowie bei übermäßiger Kabelverdrillung im Turmkopf ausgelöst wird, **dadurch gekennzeichnet, dass** die Windenergieanlage (10) mittels einer von der Windenergieanlage (10) räumlich getrennten Bedieneinrichtung (41) nach einer Sicherheitsabschaltung zum Betrieb freigegeben wird, wobei die Bedieneinrichtung (41) zur Fernbedienung der Windenergieanlage (10) vorgesehen ist, wobei die Steuereinrichtung mit der von der Windenergieanlage räumlich getrennten bzw. externen Bedieneinrichtung zur Wiederinbetriebnahme der Windenergieanlage verbunden ist, und wobei eine Sperreinrichtung an der Windenergieanlage (10) vorgesehen ist, wobei bei Aktivierung der Sperreinrichtung eine Freigabe der Windenergieanlage (10) mittels der Bedieneinrichtung (41) gesperrt wird oder ist.

2. Verfahren nach Anspruch 1, **dadurch gekennzeichnet, dass** nach der Sicherheitsabschaltung und vor der Freigabe der Windenergieanlage (10) die Windenergieanlage (10) anhand von vorbestimmten, insbesondere aktuellen, Betriebsdaten über und/oder von der Windenergieanlage (10) räumlich getrennt geprüft wird
und/oder dass nach und/oder während der Sicherheitsabschaltung der Windenergieanlage (10) die Anwesenheit von Personen an und/oder in der Windenergieanlage (10) geprüft wird.

3. Verfahren nach Anspruch 1 oder 2, **dadurch gekennzeichnet, dass** die Freigabe der Windenergieanlage (10) dokumentiert wird
und/oder dass die Windenergieanlage (10) nach Entsperrung eines, insbesondere personengebundenen und/oder funktionsfehlergebundenen und/oder hardwaregebundenen, Sicherheitscodes zum Betrieb freigegeben wird
und/oder dass nach und/oder während einer Sicherheitsabschaltung der Windenergieanlage (10) die Bedieneinrichtung (41) benachrichtigt wird
und/oder dass die Anzahl von Freigaben der Windenergieanlage (10) innerhalb einer vorbestimmten Zeitdauer begrenzt wird oder ist.

4. Energieversorgungssystem mit wenigstens einer Windenergieanlage (10), die über einen Rotor mit mindestens einem Rotorblatt, ein Bremssystem mit einer Hilfsenergieversorgung sowie ein Sicherheitssystem mit einer Sicherheitssensorik und mindestens einem Notausschalter und eine Steuerungseinrichtung mit einem Speicher zur Aufzeichnung von Betriebsdaten verfügt, **dadurch gekennzeichnet, dass** eine von der Windenergieanlage (10) räumlich getrennte Bedieneinrichtung (41) zur Fernbedienung der Windenergieanlage (10) derart vorgesehen ist, dass mittels der Bedieneinrichtung (41) die Windenergieanlage (10) nach einer von einer einem Betriebsführungssystem logisch übergeordneten Sicherheitsabschalteinrichtung, die unabhängig von der sonstigen Betriebsführung die Einhaltung sicherheitskritischer Grenzwerte der Windenergieanlage (10) überwacht und bei Überschreitung eines dieser Grenzwerte eine Sicherheitsabschaltung auslöst und im Falle eines Versagens des Betriebsführungssystems die Windenergieanlage in einem sicheren Anlagenzustand hält, ausgelösten Sicherheitsabschaltung zum Betrieb freigegeben wird oder ist, wobei die Sicherheitsabschaltung aufgrund von Überdrehzahlen, Vibrationen, Fehlern in der Steuerungshardware und/oder Steuerungssoftware sowie bei übermäßiger Kabelverdrillung im Turmkopf ausgelöst wird, wobei die Steuereinrichtung mit der von der Windenergieanlage räumlich getrennten bzw. externen Bedieneinrichtung zur Wiederinbetriebnahme der Windenergieanlage verbunden ist, und wobei eine Sperreinrichtung an der Windenergieanlage (10) vorgesehen ist, wobei bei Aktivierung der Sperreinrichtung eine Freigabe der Windenergieanlage (10) mittels der Bedieneinrichtung (41) gesperrt wird oder ist.

5. Energieversorgungssystem nach Anspruch 4, **dadurch gekennzeichnet, dass** die Sperreinrichtung als Service-Schalter ausgebildet ist.

6. Energieversorgungssystem nach Anspruch 4 oder 5, **dadurch gekennzeichnet, dass** bei Aktivierung der Sperreinrichtung der Zugriff der Bedieneinrichtung auf die Reset-Funktion einer Sicherheitskette und/oder eines Sicherheitssystems der Windenergieanlage gesperrt wird oder ist.

7. Energieversorgungssystem nach einem der Ansprüche 4 bis 6, **dadurch gekennzeichnet, dass** das Verfahren nach einem der Ansprüche 1 bis 3 ausgeführt wird.

8. Windenergieanlage (10), die über einen Rotor mit mindestens einem Rotorblatt, ein Bremssystem mit einer Hilfsenergieversorgung sowie ein Sicherheitssystem mit einer Sicherheitssensorik und mindestens einem Notausschalter und eine Steuerungseinrichtung mit einem Speicher zur Aufzeichnung von Betriebsdaten verfügt, mit einem Betriebsführungssystem und mit einer dem Betriebsführungssystem logisch übergeordneten Sicherheitsabschalteinrichtung (20) zum Auslösen eines Abschaltsignals, so dass die Windenergieanlage (10) nach Auslösen eines Abschaltsignals abgeschaltet wird oder ist, wobei die Sicherheitsabschalteinrichtung (20) unabhängig von der sonstigen Betriebsführung die Einhaltung sicherheitskritischer Grenzwerte der Windenergieanlage (10) überwacht und bei Überschreitung eines dieser Grenzwerte eine Sicherheitsabschaltung auslöst und im Falle eines Versagens des Betriebsführungssystems die Windenergieanlage in einem sicheren Anlagenzustand hält, wobei die Sicherheitsabschaltung aufgrund von Überdrehzahlen, Vibrationen, Fehlern in der Steuerungshardware und/oder Steuerungssoftware sowie bei übermäßiger Kabelverdrillung im Turmkopf ausgelöst wird, wobei die Steuereinrichtung mit der von der Windenergieanlage räumlich getrennten bzw. externen Bedieneinrichtung zur Wiederinbetriebnahme der Windenergieanlage verbunden ist, wobei eine Sperreinrichtung an der Windenergieanlage (10) vorgesehen ist, wobei bei Aktivierung der Sperreinrichtung eine Freigabe der Windenergieanlage (10) nach einer Sicherheitsabschaltung mittels einer Bedieneinrichtung (41) zur Fernbedienung der Windenergieanlage (10) gesperrt wird oder ist.

9. Windenergieanlage (10) nach Anspruch 8, **dadurch gekennzeichnet, dass** die Sperreinrichtung als Service-Schalter ausgebildet ist
und/oder dass bei Aktivierung der Sperreinrichtung der Zugriff der Bedieneinrichtung (41) auf die Reset-Funktion einer Sicherheitskette (20) und/oder eines Sicherheitssystems der Windenergieanlage (10) gesperrt wird oder ist.

10. Windenergieanlage (10), die über einen Rotor mit mindestens einem Rotorblatt, ein Bremssystem mit einer Hilfsenergieversorgung sowie ein Sicherheitssystem mit einer Sicherheitssensorik und mindestens einem Notausschalter und eine Steuerungseinrichtung mit einem Speicher zur Aufzeichnung von Betriebsdaten verfügt, mit einer Sicherheitskette (20), **dadurch gekennzeichnet, dass** ein Reset-Schalter (62) für einen Reset der Sicherheitskette (20) vorgesehen ist, der nach Auslösen einer Sicherheitsabschaltung der Windenergieanlage (10) mittels einer von der Windenergieanlage (10) räumlich getrennten Bedieneinrichtung (41) zur Fernbedienung der Windenergieanlage (10) betätigt wird oder ist oder betätigbar ist, derart, dass die Windenergieanlage (10) nach der Sicherheitsabschaltung zum Betrieb freigegeben wird, wobei die Sicherheitsabschaltung aufgrund von Überdrehzahlen, Vibrationen, Fehlern in der Steuerungshardware und/oder Steuerungssoftware sowie bei übermäßiger Kabelverdrillung im Turmkopf ausgelöst wird, wobei die Steuereinrichtung mit der von der Windenergieanlage räumlich getrennten bzw. externen Bedieneinrichtung zur Wiederinbetriebnahme der Windenergieanlage verbunden ist.

11. Windenergieanlage (10) nach Anspruch 10, **dadurch gekennzeichnet, dass** wenigstens ein manuell betätigbarer Schalter (46.1, 46.2, 46.3, 47) einer Notausschalteinrichtung (NA) vorgesehen ist, derart, dass nach manuellem Betätigen des Schalters (46.1, 46.2, 46.3, 47) eine Sicherheitsabschaltung der Windenergieanlage (10) ausgelöst wird
und/oder dass wenigstens ein von einem Sensor betätigbarer Schalter (56.1, 56.2, 56.3) einer Sicherausschalteinrichtung (SA) vorgesehen ist, derart, dass nach Betätigen des Schalters (56.1, 56.2, 56.3) eine Sicherheitsabschaltung der Windenergieanlage (10) ausgelöst wird
und/oder dass der wenigstens eine Schalter (46.1, 46.2, 46.3, 47) der Notausschalteinrichtung (NA) und der wenigstens eine Schalter (56.1, 56.2, 56.3) der Sicherausschalteinrichtung (SA) in Reihe geschaltet sind
und/oder dass bei einer Notausschaltung durch die Notausschalteinrichtung (NA) eine Freigabe der Windenergieanlage durch die Bedieneinrichtung (41) gesperrt ist oder wird.

12. Windenergieanlage (10) nach Anspruch 10 oder 11, **dadurch gekennzeichnet, dass** bei einer Notausschaltung durch die Notausschalteinrichtung (NA) der Rotor mittels, insbesondere mechanischer, Bremseinrichtungen zum Stillstand gebracht wird und/oder Bauteile spannungslos geschaltet werden
oder dass bei einer Sicherausschaltung durch die Sicherausschalteinrichtung (SA) der Rotor, durch Bremseinrichtungen in einen lastarmen Betrieb oder Zustand, insbesondere Trudelzustand, gebracht wird.

13. Windenergieanlage (10) nach einem der Ansprüche 10 bis 12, **dadurch gekennzeichnet, dass** wenigstens ein weiterer Reset-Schalter (61.1, 61.2, 61.3) vorgesehen ist und/oder dass mehrere Reset-Schalter (61.1, 61.2, 61.3, 62) parallel zueinander geschaltet sind
und/oder dass die Notausschalteinrichtung (NA) und/oder die Sicherausschalteinrichtung (SA) jeweils wenigstens ein, insbesondere zwei, Schalt-Relais (48, 49, 58, 59) aufweist und/oder dass eine, insbesondere unterbrechungsfreie, Stromversorgung (45) vorgesehen ist
und/oder dass die Sicherheitskette (20) als verdrahtete, insbesondere hartverdrahtete, Schaltung ausgebildet ist.

## Claims

1. A method of operating a wind energy installation (10), which comprises a rotor with at least one rotor blade, a braking system with an auxiliary power supply, as well as a safety system with a safety sensor system and at least one emergency stop switch and a control device with a memory for recording operating data, wherein the wind energy installation (10) is switched off after the triggering of a switching-off signal by a safety switching-off device (20) which, from a logic point of view, is superordinate with respect to an operational management system, which safety switching-off device (20), independently of any other operational management, monitors the compliance with safety-critical limit values of the wind energy installation (10) and, if one of these limit values is exceeded, triggers a safety switching-off process and, in the case of a failure of the operational management system, keeps the wind energy installation in a safe operational condition, wherein the safety switching-off process is triggered due to excessive rotational speed, vibrations, errors in the control hardware and/or control software, as well as in the event of excessive cable twisting in the tower head, **characterised in that** the wind energy installation (10) is given clearance to operate after a safety switching-off process by means of an operating control device (41) which is spatially separated from the wind energy installation (10), wherein the operating control device (41) is provided for the remote control of the wind energy installation (10), wherein the control device is connected to the operating control device, which is spatially separated from, and external to, the wind energy installation, for resuming operation of the wind energy installation, and wherein a blocking device is provided on the wind energy installation (10), wherein, when the blocking device is activated, clearance of the wind energy installation (10) by means of the operating control device (41) is blocked.

2. A method as claimed in claim 1, **characterised in that**, after the safety switching-off process and before the clearance of the wind energy installation (10) is given, the wind energy installation (10) is remotely checked with reference to predetermined operational data, in particular current operational data, about and/or from the wind energy installation (10)
and/or that after and/or during the safety switching-off process of the wind energy installation (10), the presence of people on and/or in the wind energy installation (10) is checked.

3. A method as claimed in claim 1 or 2, **characterised in that** the giving of clearance of the wind energy installation (10) is documented
and/or that the wind energy installation (10) is given clearance for operation after unblocking of a security code, in particular a security code which is person-specific and/or specific to malfunctions and/or specific to hardware
and/or that after and/or during a safety switching-off process of the wind energy installation (10) the operating control device (41) is notified
and/or that the number of clearances of the wind energy installation (10) within a predetermined period of time is limited.

4. An energy supply system with at least one wind energy installation (10), which comprises a rotor with at least one rotor blade, a braking system with an auxiliary power supply, as well as a safety system with a safety sensor system and at least one emergency stop switch and a control device with a memory for recording operating data, **characterised in that** an operating control device (41), which is spatially separated from the wind energy installation (10), is provided for the remote control of the wind energy installation (10) such that the wind energy installation (10) is given clearance for operation by means of the operating control device (41) after a safety switching-off process triggered by a safety switching-off device which, from a logic point of view, is superordinate with respect to an operational control system, which safety switching-off device, independently of any other operational management, monitors the compliance with safety-critical limit values of the wind energy installation (10) and, if one of these limit values is exceeded, triggers a safety switching-off process and, in the case of a failure of the operational management system, keeps the wind energy installation in a safe operational condition, wherein the safety switching-off process is triggered due to excessive rotational speed, vibrations, errors in the control hardware and/or control software, as well as in the event of excessive cable twisting in the tower head, wherein the control device is connected to the operating control device, which is spatially separated from, and external to, the wind energy installation, for resuming operation of the wind energy installation, and wherein a blocking device is provided on the wind energy installation (10) wherein when the blocking device is activated, clearance of the wind energy installation (10) by means of the operating control device (41) is blocked.

5. An energy supply system as claimed in claim 4, **characterised in that** the blocking device is constructed in the form of a service switch.

6. An energy supply system as claimed in claim 4 or 5, **characterised in that** when the blocking device is activated, access of the operating control device to the reset function of a safety chain and/or a safety system of the wind energy installation is blocked.

7. An energy supply system as claimed in any one of claims 4 to 6, **characterised in that** the method is performed in accordance with any one of claims 1 to 3.

8. A wind energy installation (10), which comprises a rotor with at least one rotor blade, a braking system with an auxiliary power supply, as well as a safety system with a safety sensor system and at least one emergency stop switch and a control device with a memory for recording operating data, the wind energy installation (10) comprising an operational control system and a safety switching-off device (20), which, from a logic point of view, is superordinate with respect to the operational control system, for triggering a switching-off signal so that the wind energy installation (10) is switched off after triggering of a switching-off signal, wherein the safety switching-off device (20), independently of any other operational management, monitors the compliance with safety-critical limit values of the wind energy installation (10) and, if one of these limit values is exceeded, triggers a safety switching-off process and, in the case of a failure of the operational management system, keeps the wind energy installation in a safe operational condition, wherein the safety switching-off process is triggered due to excessive rotational speed, vibrations, errors in the control hardware and/or control software, as well as in the event of excessive cable twisting in the tower head, wherein the control device is connected to the operating control device, which is spatially separated from, and external to, the wind energy installation, for resuming operation of the wind energy installation, wherein a blocking device is provided on the wind energy installation (10), wherein, when the blocking device is activated, clearance of the wind energy installation (10) after a safety switching-off process by means of an operating control device (41) for the remote control of the wind energy installation (10) is blocked.

9. A wind energy installation (10) as claimed in claim 8, **characterised in that** the blocking device is constructed in the form of a service switch
and/or that, when the blocking device is activated, access of the operating control device (41) to the reset function of a safety chain (20) and/or a safety system of the wind energy installation (10) is blocked.

10. A wind energy installation (10), which comprises a rotor with at least one rotor blade, a braking system with an auxiliary power supply, as well as a safety system with a safety sensor system and at least one emergency stop switch and a control device with a memory for recording operating data, the wind energy installation (10) comprising a safety chain (20), **characterised in that** a reset switch (62) for resetting the safety chain (20) is provided which, by means of an operating control device (41) for the remote control of the wind energy installation (10), which operating control device (41) is spatially separated from the wind energy installation (10), is actuated or can be actuated after a safety switching-off process of the wind energy installation (10) has been triggered, such that the wind energy installation (10) is given clearance for operation after the safety switching-off process, wherein the safety switching-off process is triggered due to excessive rotational speed, vibrations, errors in the control hardware and/or control software, as well as in the event of excessive cable twisting in the tower head, wherein the control device is connected to the operating control device, which is spatially separated from, and external to, the wind energy installation, for resuming operation of the wind energy installation.

11. A wind energy installation (10) as claimed in claim 10, **characterised in that** at least one manually operable switch (46.1, 46.2, 46.3, 47) of an emergency switching-off device (NA) is provided such that after manual operation of the switch (46.1, 46.2, 46.3, 47) a safety switching-off process of the wind energy installation is initiated
and/or that at least one switch (56.1, 56.2 , 56.3), which can be actuated by a sensor, of a safety switching-off device (SA) is provided such that, after the switch (56.1, 56.2, 56.3) has been actuated, a safety switching-off process of the wind energy installation (10) is initiated
and/or that the at least one switch (46.1, 46.2, 46.3, 47) of the emergency switching-off device (NA) and the at least one switch (56.1, 56.2, 56.3) of the safety switching-off device (SA) are connected in series
and/or that, in the event of an emergency switching-off process by the emergency switching-off device (NA) clearance of the wind energy installation by the operating control device (41) is blocked.

12. A wind energy installation (10) as claimed in claim 10 or 11, **characterised in that**, in the event of an emergency switching-off process by the emergency switching-off device (NA), the rotor is brought to a standstill by means of breaking devices, in particular mechanical breaking devices, and/or components are de-energised
or that in the event of a safety switching-off process by the safety switching-off device (SA) the rotor is transferred, by breaking devices, into a low-load operation or condition, in particular a freewheeling condition.

13. A wind energy installation (10) as claimed in any one of claims 10 to 12, **characterised in that** at least one further reset switch (61.1, 61.2, 61.3) is provided and/or that a plurality of reset switches (61.1, 61.2, 61.3, 62) are connected in parallel with one another
and/or that each of the emergency switching-off device (NA) and/or the safety switching-off device (SA) comprises a respective at least one, in particular two, switching relays (48, 49, 58, 59)
and/or that a power supply (45), in particular of an uninterruptable type, is provided
and/or that the safety chain (20) is constructed in the form of a wired circuit, in particular a hard-wired circuit.

## Revendications

1. Procédé pour l'exploitation d'une installation éolienne (10), qui dispose d'un rotor avec au moins une pale de rotor, un système de freinage avec une alimentation en énergie auxiliaire ainsi qu'un système de sécurité avec un système de capteurs de sécurité et au moins un interrupteur de déconnexion d'urgence et un dispositif de commande avec une mémoire pour l'enregistrement de données d'exploitation, dans lequel l'installation éolienne (10) est déconnectée après le déclenchement d'un signal de déconnexion par un système de déconnexion de sécurité (20) ayant prééminence logiquement sur un système de conduite d'exploitation, qui surveille, indépendamment d'autre conduite d'exploitation, le respect de valeurs limites critiques en sécurité de l'installation éolienne (10) et, en cas de dépassement d'une de ces valeurs limites, déclenche une déconnexion de sécurité et, dans le cas d'une défaillance du système de conduite d'exploitation, maintient l'installation éolienne dans un état d'installation sûr, dans lequel la déconnexion de sécurité est déclenchée en raison de survitesses de rotation, vibrations, erreurs dans le matériel de commande et/ou logiciel de commande ainsi qu'est déclenchée en cas de torsion de câble excessive dans la tête de tour, **caractérisé en ce que**, après une déconnexion de sécurité, l'installation éolienne (10) est autorisée pour son exploitation au moyen d'un dispositif de commande (41) séparé dans l'espace par rapport à l'installation éolienne (10), le dispositif de commande (41) étant prévu pour la télécommande de l'installation éolienne (10), le dispositif de commande étant relié au dispositif de commande externe ou séparé dans l'espace par rapport à l'installation éolienne pour la remise en service de l'installation éolienne, et un dispositif de blocage étant prévu sur l'installation éolienne (10), de sorte que, lorsque le dispositif de blocage est activé, l'autorisation pour exploitation de l'installation éolienne (10) au moyen du dispositif de commande (41) est empêchée.

2. Procédé selon la revendication 1, **caractérisé en ce que**, après la déconnexion de sécurité et avant l'autorisation pour exploitation de l'installation éolienne (10), l'installation éolienne (10) est testée séparément dans l'espace à l'aide de données d'exploitation prédéfinies, en particulier de données d'exploitation actuelles, lesdites données concernant l'installation éolienne (10) et/ou étant issues de l'installation éolienne (10) et/ou **en ce que**, après et/ou pendant la déconnexion de sécurité de l'installation éolienne (10), la présence de personnes sur et/ou dans l'installation éolienne (10) est testée.

3. Procédé selon la revendication 1 ou 2, **caractérisé en ce que** l'autorisation pour exploitation de l'installation éolienne (10) est documentée et/ou **en ce que** l'exploitation de l'installation éolienne (10) est autorisée après le déblocage d'un code de sécurité, en particulier lié aux personnes
et/ou lié au défaut de fonctionnement et/ou lié au matériel
et/ou **en ce que** le dispositif de commande (41) est informé après
et/ou pendant une déconnexion de sécurité de l'installation éolienne (10)
et/ou **en ce que** le nombre d'autorisation pour exploitation de l'installation éolienne (10) est limité dans le délai d'une durée prédéfinie.

4. Système d'alimentation en énergie comprenant au moins une installation éolienne (10), qui dispose d'un rotor avec au moins une pale de rotor, un système de freinage avec une alimentation en énergie auxiliaire ainsi qu'un système de sécurité avec un système de capteurs de sécurité et au moins un interrupteur de déconnexion d'urgence et un dispositif de commande avec une mémoire pour l'enregistrement de données d'exploitation, **caractérisé en ce qu'**un dispositif de commande (41), séparé dans l'espace de l'installation éolienne (10), est prévu pour la télécommande de l'installation éolienne (10) de telle sorte que l'installation éolienne (10) est autorisée pour son exploitation au moyen du dispositif de commande (41) après une déconnexion de sécurité, déclenchée par un dispositif de déconnexion de sécurité ayant prééminence logiquement sur un système de conduite d'exploitation, qui surveille indépendamment d'autre conduite d'exploitation le respect de valeurs limites critiques en sécurité de l'installation éolienne (10) et en cas de dépassement d'une de ces valeurs limites déclenche une déconnexion de sécurité et dans le cas d'une défaillance du système de conduite d'exploitation maintient l'installation éolienne dans un état d'installation sûr, dans lequel la déconnexion de sécurité est déclenchée en raison de survitesses de rotation, vibrations, erreurs dans le matériel de commande et/ou logiciel de commande ainsi qu'est déclenchée en cas de torsion de câble excessive dans la tête de tour, dans lequel le dispositif de commande est relié au dispositif de commande externe ou séparé dans l'espace par rapport à l'installation éolienne pour la remise en service de l'installation éolienne, et dans lequel un dispositif de blocage est prévu sur l'installation éolienne (10), et dans lequel, lorsque le dispositif de blocage est activé, l'autorisation pour exploitation de l'installation éolienne (10) au moyen du dispositif de commande (41) est empêchée.

5. Système d'alimentation en énergie selon la revendication 4, **caractérisé en ce que** le dispositif de blocage est conçu sous la forme d'un interrupteur de service.

6. Système d'alimentation en énergie selon la revendication 4 ou 5, **caractérisé en ce que**, en cas d'activation du dispositif de blocage, l'accès du dispositif de commande à la fonction de réinitialisation d'une chaîne de sécurité et/ou d'un système de sécurité de l'installation éolienne est bloqué.

7. Système d'alimentation en énergie selon l'une des revendications 4 à 6, **caractérisé en ce que** le procédé est réalisé selon l'une des revendications 1 à 3.

8. Installation éolienne (10) qui dispose d'un rotor avec au moins une pale de rotor, un système de freinage avec une alimentation en énergie auxiliaire ainsi qu'un système de sécurité avec un système de capteurs de sécurité et au moins un interrupteur de déconnexion d'urgence et un dispositif de commande avec une mémoire pour l'enregistrement de données d'exploitation, comprenant un système de conduite d'exploitation et un dispositif de déconnexion de sécurité (20) ayant prééminence logiquement sur le système de conduite d'exploitation pour le déclenchement d'un signal de déconnexion, de sorte que l'installation éolienne (10) est déconnectée après le déclenchement d'un signal de déconnexion, dans laquelle le dispositif de déconnexion de sécurité (20) surveille indépendamment d'autre conduite d'exploitation le respect de valeurs limites critiques en sécurité de l'installation éolienne (10) et en cas de dépassement d'une de ces valeurs limites déclenche une déconnexion de sécurité et dans le cas d'une défaillance du système de conduite d'exploitation maintient l'installation éolienne dans un état d'installation sûr, dans lequel la déconnexion de sécurité est déclenchée en raison de survitesses de rotation, vibrations, erreurs dans le matériel de commande et/ou logiciel de commande ainsi qu'est déclenchée en cas de torsion de câble excessive dans la tête de tour, dans laquelle le dispositif de commande est relié au dispositif de commande externe ou séparé dans l'espace par rapport à l'installation éolienne pour la remise en service de l'installation éolienne, dans laquelle un dispositif de blocage est prévu sur l'installation éolienne (10), dans laquelle, en cas d'activation du dispositif de blocage après une déconnexion de sécurité, une autorisation pour exploitation de l'installation éolienne (10) au moyen d'un dispositif de commande (41) pour la télécommande de l'installation éolienne (10) est empêchée.

9. Installation éolienne (10) selon la revendication 8, **caractérisée en ce que** le dispositif de blocage est conçu sous la forme d'un interrupteur de service
et/ou **en ce que**, en cas d'activation du dispositif de blocage, l'accès du dispositif de commande (41) à la fonction de réinitialisation d'une chaîne de sécurité (20)
et/ou d'un système de sécurité de l'installation éolienne (10), est bloqué.

10. Installation éolienne (10) qui dispose d'un rotor avec au moins une pale de rotor, un système de freinage avec une alimentation en énergie auxiliaire ainsi qu'un système de sécurité avec un système de capteurs de sécurité et au moins un interrupteur de déconnexion d'urgence et un dispositif de commande avec une mémoire pour l'enregistrement de données d'exploitation, avec une chaîne de sécurité (20), **caractérisée en ce qu'**un interrupteur de réinitialisation (62) pour une réinitialisation de la chaîne de sécurité (20) est prévu, lequel est actionné ou peut être actionné, après le déclenchement d'une déconnexion de sécurité de l'installation éolienne (10) au moyen d'un dispositif de commande (41), séparé dans l'espace par rapport à l'installation éolienne (10), pour la télécommande de l'installation éolienne (10), de telle sorte que l'installation éolienne (10) est autorisée pour son exploitation après la déconnexion de sécurité, dans laquelle la déconnexion de sécurité est déclenchée en raison de survitesses de rotation, vibrations, erreurs dans le matériel de commande et/ou logiciel de commande ainsi qu'est déclenchée en cas de torsion de câble excessive dans la tête de tour, dans laquelle le dispositif de commande est relié au dispositif de commande externe ou séparé dans l'espace par rapport à l'installation éolienne pour la remise en service de l'installation éolienne.

11. Installation éolienne (10) selon la revendication 10, **caractérisée en ce qu'**au moins un interrupteur (46.1, 46.2, 46.3, 47) pouvant être actionné manuellement d'un dispositif de déconnexion d'urgence (NA) est prévu de telle sorte que, après l'actionnement manuel de l'interrupteur (46.1, 46.2, 46.3, 47), une déconnexion de sécurité de l'installation éolienne (10) est déclenchée
et/ou **en ce qu'**au moins un interrupteur (56.1, 56.2, 56.3), pouvant être actionné par un capteur, d'un dispositif de déconnexion de sécurité (SA) est prévu, de telle sorte que, après l'actionnement de l'interrupteur (56.1, 56.2, 56.3), une déconnexion de sécurité de l'installation éolienne (10) est déclenchée
et/ou **en ce que** l'au moins un interrupteur (46.1, 46.2, 46.3, 47) du dispositif de déconnexion d'urgence (NA) et l'au moins un interrupteur (56.1, 56.2, 56.3) du dispositif de déconnexion de sécurité (SA) sont montés en série
et/ou **en ce que**, dans le cas d'une déconnexion d'urgence par le dispositif de déconnexion d'urgence (NA), une autorisation pour exploitation de l'installation éolienne par le dispositif de commande (41) est empêchée.

12. Installation éolienne (10) selon la revendication 10 ou 11, **caractérisée en ce que**, dans le cas d'une déconnexion d'urgence par le dispositif de déconnexion d'urgence (NA), le rotor est mis à l'arrêt au moyen de dispositifs de freinage, en particulier mécaniques,
et/ou des composants sont mis hors tension ou **en ce que**, dans le cas d'une déconnexion de sécurité par le dispositif de déconnexion de sécurité (SA), le rotor est amené par des dispositifs de freinage dans un service ou un état pauvre en charge, en particulier un état de vrille.

13. Installation éolienne (10) selon l'une des revendications 10 à 12, **caractérisée en ce qu'**au moins un autre interrupteur de réinitialisation (61.1, 61.2, 61.3) est prévu et **en ce que** plusieurs interrupteurs de réinitialisation (61.1, 61.2, 61.3, 62) sont montés en parallèle les uns par rapport aux autres
et/ou **en ce que** le dispositif de déconnexion d'urgence (NA) et/ou le dispositif de déconnexion de sécurité (SA) présentent à chaque fois au moins un, en particulier deux, relais de commutation (48, 49, 58, 59)
et/ou **en ce qu'**une alimentation en courant, en particulier sans interruption (45), est prévue
et/ou **en ce que** la chaîne de sécurité (20) est conçue comme circuit câblé, en particulier câblé en dur.
